# EUROPEAN PATENT APPLICATION

(11) **EP 4 345 649 A1**
(43) Date of publication of application: **03.04.2024**
(21) Application number: 22198871.0
(22) Date of filing: 29.09.2022
(51) Int. Cl.: G06F 16/48, G06Q 90/00

(54) **COMPUTER-IMPLEMENTED METHOD AND SYSTEM FOR PROCESSING A SERVICE WITH SOVEREIGN DATA**

(71) Applicant: Siemens Aktiengesellschaft, 80333 München (DE)
(72) Inventor: Karagiannis, Vasileios, 1070 Wien (AT)
(74) Representative: Siemens Patent Attorneys

(57) **Abstract**

Computer-implemented method for processing a service by a processing device (L), wherein following steps are executed:
a) Providing data service information (SDS),
b) requesting a first search (SDS_DP) of metadata (MD1, MD2) within data sets which comply with the data service information (SDS) from a data provider data base (DP1, DP2), processing the first search by the data provider data base (DP1,DP2), and receiving a first result metadata (R_DP) from the first search,
c) requesting a second search (SDS_REG) of metadata (MD1, MD2) within datasets which comply with the data service information (SDS) from a registry data base (REG), processing the second search, receiving a second result metadata (R_REG) from the second search,
d) combining (C_MD) the first and the second result metadata (R_DP, R_REG) to one combined result (MD),
e) providing an actual service and actual service data by a user (U),
f) requesting service datasets (DS) using the actual service data and the combined result (MD) from the data provider data base (DP1,DP2), preparing accepted conditions (AT_DP) and providing condition data,
g) Processing the actual service (PR) using the actual service data and the accepted conditions (AT_DP) and returning the result (RES).

## Description

The invention relates to a computer-implemented method and a system for processing a service with sovereign data by a processing device, and a computer program product thereof.

The invention enables a user to process multiple sovereign datasets from different organizations. The exchange of sovereign datasets is a novel trend in computing. Sovereign dataset exchange refers to sharing a dataset while the owner of the dataset maintains full control over the data.

This can be achieved by sharing datasets along with restrictions regarding: their use (e.g., read, redistribute, process, or other), the type of allowed processing (e.g., only certain processing operations are allowed), the calendar periods that the datasets shall be accessed/processed, etc.

The concept of sovereign datasets includes still an open problem in the context of digital sovereignty because the existing prior art focuses on facilitating the processing of individual sovereign datasets. Consequently, the problem of processing multiple sovereign datasets with different usage restrictions has not been addressed.

So far, there is no solution for this problem, i.e., it is not possible for a user to combine and process multiple sovereign datasets because there is no prior art on combining usage restriction of multiple datasets. However, there is prior art related to processing sovereign datasets individually.

The patent publication US10984410B2 describes a system whereby a user shares data with an entity along with specific permissions for the use of this data which is stored in a blockchain.

The publication Braud, A., Fromentoux, G., Radier, B. and Le Grand, O., 2021, The Road to European Digital Sovereignty with Gaia-X and IDSA, IEEE Network, 35(2), pp.4-5, describes the efforts of the Gaia-X and IDSA initiatives to define an infrastructure which enables data owners to share their data with specific usage restrictions.

Currently, there is prior art which describes how a user can gain access to sovereign datasets. Also, how a data owner can share sovereign datasets. However, since each dataset can have different usage permissions, restrictions, and constraints, the existing prior art fails to describe if and how multiple datasets from different data providers can be processed together without violating any of the usage terms.

Combining datasets from different organizations can be crucial for data engineers, data scientists, analysts, and statisticians from various sectors. Data from one organization may have little or no value alone, but combined data from multiple organizations can be highly valuable due to being more inclusive of information. For example, processing patient data from one hospital may not show anything unusual. However, processing data from many hospitals around the world could show critical information such as the forthcoming of a global pandemic. Similarly, processing large datasets from many organizations of any sector, can be invaluable compared to processing data from a single organization. Moreover, existing approaches rely on trust among organizations and individuals. While organizations are legal entities that can be bound by legal contracts, sharing datasets among individuals may lead to data leaks and digital piracy.

It is the objective of this invention to improve and solve said disadvantages in prior art.

The objective of the invention is solved by a method according to the preamble of claim 1, wherein following steps are executed:
a) Providing data service information, including information about conditions for a data service, by a user (U) to the processing device,
b) requesting at least one first search of metadata within data sets which comply with the data service information from at least one data provider data base by the processing device, processing the at least one first search by the at least one data provider data base, and receiving at least one first result metadata from the first search from the at least one data provider data base by the processing device,
c) requesting at least one second search of metadata within datasets which comply with the data service information from at least one registry data base by the processing device, processing the at least one second search, receiving at least one second result metadata by the processing device,
d) combining the at least one first and the at least one second result metadata to one combined result by the processing device,
e) providing an actual service and actual service data by a user to the processing device,
f) requesting service datasets using the actual service data and the combined result from the at least one data provider data base by the processing device, preparing accepted conditions and providing condition data to the processing device,
g) Processing the actual service by the processing device using the actual service data and the accepted conditions and returning the result.

The invention addresses the access problem to sovereign datasets by describing a system with a liaison that acquires multiple datasets under potentially different contracts, combines their terms of use in a way that meets all the usage restrictions, and provides the user with results.

Moreover, the invention addresses the specific problem of combining multiple sovereign datasets -along with their terms of use- and processing them in a uniform manner.

Data providers and data registries with the respective data bases can be realized e.g. by respective processing devices with a processor and a memory and including data bases.

Regarding the combination of datasets from different organizations, the invention describes the exchange of multiple sovereign datasets without sharing the actual data with individuals.

While individuals can use the system, they gain access only to the results of the processing.

The liaison, i.e. a processing device, on the other hand, gains access to the data, but is also liable to the consequences of violating the terms of use.

As a result, the invention describes a more secure way to process multiple sovereign datasets.

This also encourages data providers to share their data because the Liaison provides assurances (bound by legal contracts) regarding the use of the data and is liable for breaches of contract and data leaks.

In step b) and c) metadata are retrieved by data provider and registries in a way, where no data but only metadata are provided for the further processing.

Subsequently, specific data for a process to be executed are retrieved and optionally electronically signed.

Therefore sovereign datasets are processed and the advantages as stated before are obtained.

In a further embodiment of the invention the conditions of the data service comprise technical and/or contractual information, e.g. requirements and/or characteristics.

Thereby, the execution of the data service, i.e. if restrictive conditions can be still fulfilled, can be verified before the particular execution happens.

In a further embodiment of the invention the one combined result set is one single data structure.

Thus, the method becomes very easy to implement since the data exchange between involved parties, like data providers and data registries, can be improved.

The problem of the invention is also solved by a system for processing a service by a processing device, comprising the processing device, at least one data provider data base, a data registry data base, wherein the steps of the method according to the invention are executed.

The problem of the invention is also solved by a computer program product, comprising instructions which, when the program is executed by a computer, cause it to carry out the method/steps of the method according to the invention.

In a further embodiment of the invention in step f) preparing accepted conditions is performed by approving the conditions for supporting the execution of the data service of step a), and digitally signing the conditions as accepted conditions.

In a further embodiment of the invention in step g) the processing comprises combining schemas of the data being processed.

The invention is explained in more detail below with reference to an exemplary embodiment illustrated in the enclosed drawings. In the drawings shows:
- Fig. 1: an embodiment with a block/component diagram of the system,
- Fig. 2: an embodiment with a schematic sequence diagram of the method.

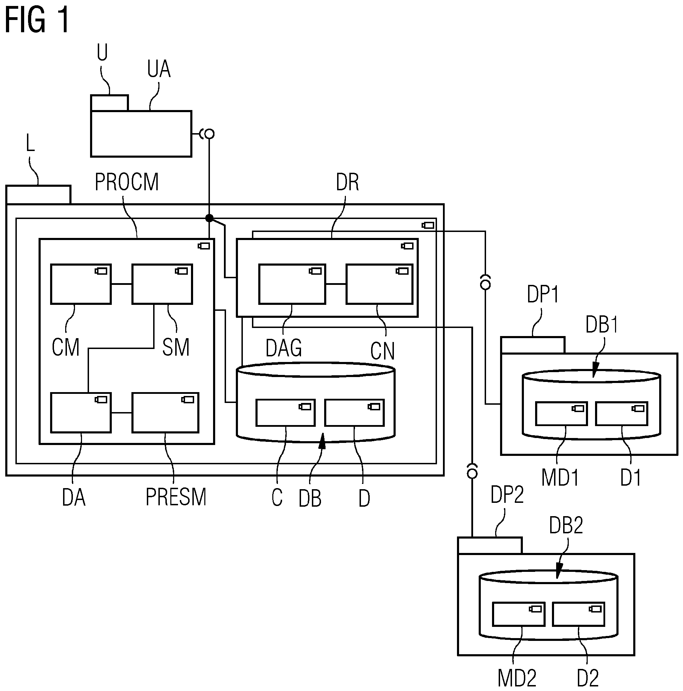

**Fig. 1** shows an embodiment of the invention with a block diagram of the internal architecture and functionality of a system that mediates between a user and multiple data providers with data bases.

This system is implemented by an organization that is a legal entity, hereinafter referred to as a Liaison, and can acquire datasets from multiple data providers. To acquire such datasets, the Liaison must agree to the usage restrictions of the data providers. To make this agreement formal, the Liaison sends to the data providers legal contracts that verify the terms of use of the acquired data.

These terms of use can refer to the duration of the processing of the data (e.g., number of days), the type of processing of the data, such as: mathematical operations (e.g., median, max, etc.), predictive methods (e.g., regression, classification, clustering, labeling, etc.), and allowed presentation of the data (e.g., plotting representations like bar graphs, line graphs, box plots, etc.,), among others. In addition, specific parameters for such processing operations, such as the tick interval of graphs or the type of allowed regression (e.g., linear or polynomial).

As soon as the Liaison prepares contracts and acquires multiple datasets from various data providers, the Liaison is responsible for receiving processing queries from a user, for performing the processing of the data according to these queries, and for sending the results back to the user -subject to the terms of the relevant contracts. This way, users can perform queries on a combined set of data from multiple organizations, while these organization have legal contracts regarding the use of their data. The Liaison is liable for any breach of contract.

Fig. 1 shows a component diagram with the internal architecture of the system that shall be implemented by the Liaison.

The following components are included in the figure:
A user U represents the person or an application that wants to perform processing operations on multiple sovereign datasets.

The user U utilizes the following component:
User application UA: a user application UA is a software application, e.g., a web application accessible from an Internet browser, or an application that runs on an operating system such as Windows, Linux or other. Such application provides a user interface so that users can access the system and use the provided functionality, i.e., requests datasets from multiple data providers, perform processing on these datasets, and acquire the results.

Liaison L: The liaison L is a legal entity that provides the service of performing processing operations on multiple sovereign datasets to the user. The liaison L shall implement the following components:
- Data requestor DR: Through the user application UA, a user U can submit a search request for datasets based on various dataset characteristics, e.g., data origin, data attributes, calendar dates, etc. This request is handled by the data requestor DR, which is a component that redirects the search to all the subscribed data providers DP1, DP2. The data requestor DR can also submit the search request to data registries REG, i.e., centralized repositories which host datasets from multiple organizations. Since the data is -at this point- private to the Data providers, the search request is performed on metadata, i.e., detailed descriptions of the data. Thus, a search request sent to a data provider DP, for instance a first and a second data provider DP1, DP2, is compared against the data providers' metadata MD, i.e. first and second metadata MD1 and MD2. The data providers' response to the search includes information about the datasets of the data provider DP1, DP2 that match the search criteria of the user U. This response is sent back to the data requestor DR, and then to the user. If the user is satisfied by the search response, then the user can request the datasets. The data requestor DR also includes the following components:
   - Data aggregator DAG: When the user U requests datasets, the data aggregator DAG connects to the data providers DP1, DP2 of the desired datasets and requests these datasets. The data providers DP1, DP2 then respond with the terms of use of the data. As long as the terms are accepted, the data aggregator DAG retrieves the datasets D and stores them in the Liaison's L data base DB.
   - Contract negotiator CN: The contract negotiator CN is responsible for handling the terms of use of the data providers DP1, DP2, and for signing contracts which provide the appropriate legal assurances about the terms of use of the data D. The contracts C are sent to the corresponding data providers DP1, DP2.
- Data base DB:
   - Data D: This component stores all data of the datasets D acquired by data providers DP1, DP2.
   - Contracts C: This component stores the contracts C of all the datasets D.
- Processing manager PROCM: As soon as the requested datasets D have been retrieved, the user U can perform processing on the data D. A processing request is sent from the user application UA to the processing manager PROCM. A processing request includes the type of processing (e.g., linear regression), and the parameters of the processing. The parameters specify the values of a new dataset consisting of values from the datasets acquired from the different data providers DP1, DP2. This new dataset is referred to as combined dataset hereinafter and will be used for serving the processing request of the user U.
   - Contract manager CM: When a processing request is received by the processing manager PROCM, the contract manager CM examines the combined dataset that is created for serving the processing request and creates a new contract that details the terms of use of the combined dataset. The new contract is referred to as combined contract hereinafter and is created by combining information from the individual contracts of the datasets that are used to create the combined dataset. When combining information from multiple contracts, the union of restrictive usage terms shall be considered. For example, if contract A: linear regression is not allowed, and contract B: polynomial regression is not allowed, then the combined contract will have: linear regression is not allowed -and- polynomial regression is not allowed. On the contrary, for permissive usage terms, the intersection shall be considered. For example, if contract A: min, max, average, median are allowed, and contract B: min, max, standard deviation, average are allowed, then the combined contract will have: min, max, average are allowed.
- Schema matcher SM: After the combined contract is created, the schema matcher SM processes the combined dataset and ensures that the data stemming from different data providers follows the same format, structure, and semantics, and are able to be processed in a uniform manner. For example, if dataset A is retrieved in XML format, and dataset B is retrieved in JSON format, these two datasets need to be combined into a combined dataset which is represented in a uniform manner, i.e., in one common format.
- Data analyzer DA: When the combined dataset includes data that are represented uniformly, the data analyzer DA performs the requested type of processing on the combined dataset based on the processing request of the user U.
- Presentation manager PRESM: The result of the processing is processed by the presentation manager PRESM which is responsible for converting the results in a format allowed by the terms of the combined contract, e.g., using graphs. This result is then sent back to the User application and shown to the user U.

### Data provider DP, DP1, DP2:

A data provider DP, in this example the first and the second data provider DP1, DP2 is an entity (individual or organization) that wants to share a dataset with or without usage restrictions. The liaison L may contact any number of data providers to acquire multiple datasets. The data providers DP1, DP2 need to be able to provide access to their data to the liaison L through an interface. Each data provider DP1, DP2 shall have an own data base DB1, DB2 that host the datasets, i.e. a data storage.

### • Data base DB1, DB2:

Each data provider DP1, DP2 can have one or more datasets with data that shall be shared and preferably stored in a respective data base DB1, DB2.

Each dataset has a file of metadata, for instance first and second metadata MD1, MD2 that details the respective data D1, D2 (e.g., by providing information about the data such as context, content, structure, and format, among others) -but without revealing any of the actual data.

The figure follows standard UML notation for component diagrams:
The battery symbol means a component to represent a system can comprise components which in turn can comprise subcomponents.

The arrow symbols in connecting lines represent interfaces between elements (e.g., for client-server communication).

When a component has a line to a full circle it means that this component implements the interface (e.g., it is the server), and when a component has a line to a half circle (that is adjacent to a full circle) it means that this component uses the interface (e.g., it is the client).

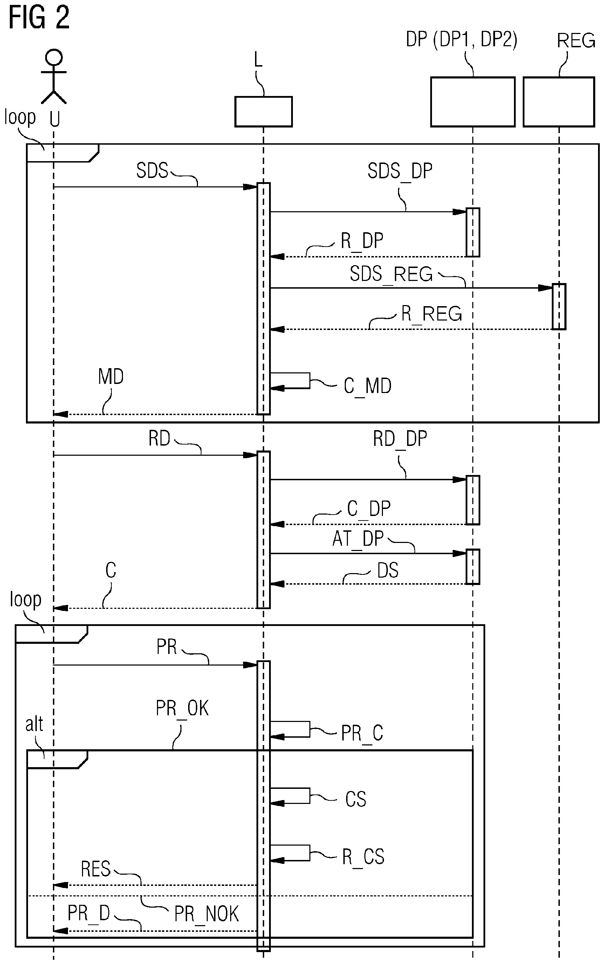

**Fig. 2** shows an exemplary data flow by a sequence diagram of the system according to the Fig. 1.

This diagram shows the interactions that take place among the user U, the liaison L, the data providers DP, e.g. DP1, DP2 from the Fig. 1, and potentially data registry data bases REG.

First, the user U searches in step SDS for datasets based on user-defined characteristics.

To realize this search, the liaison L contacts in step SDS_DP various data providers DP and in step SDS_REG dataset registries to find data providers that have datasets which meet the user-defined characteristics.

The response of this search from the data providers DP (e.g. DP1, DP2 from the previous figure) or data registries REG in step R_DP and R_REG, respectively, contains metadata MD, that detail relevant datasets. The search results from data providers DP and data registries REG are combined in step C_MD, and sent back to the user U.

The user U can repeat this search, by a loop, until the user U wants to get access to the actual data. In this case, the user U requests the datasets D from the liaison L in step RD.

The Liaison L requests the datasets D1, D2 with respect to their identifiers from the data providers DP1, DP2 in step RD_DP, receives the terms of usage as contracts with respect to the identifiers in step C_DP, agrees to the terms of use of each one of the requested datasets in step AT_DP and retrieves the data D1, D2 in step DS.

Then, the liaison L informs the user of the terms of use of the datasets D1, D2 by showing the contracts C.

After that, the user U is able to send a processing request PR for the data to the liaison L.

A processing request PR includes the type of processing and parameters which specify how to create the combined dataset from the data D1 and D2 (in Fig. 1), created by step CS, on which the processing shall be performed.

The combined dataset from step CS can include any combination of values from the retrieved datasets D1, D2 of the Data providers.

For each processing request PR, a combined contract is created in step PR_C which also examines whether the values of the combined dataset CS are used according to the terms of use of their corresponding contracts C.

If the user U requests for processing that is not allowed by the contracts C, by step PR_NOK, then the processing will not take place, e.g. a contract error can be notified, and the user U will be informed of the contract C restrictions.

Otherwise, the liaison L shall perform the requested processing in step PR_OK. The combined dataset is derived using a combination of datasets D1, D2 in step CS and the result of the processing specified by the processing request PR is calculated in step R_CS considering type of processing, the combined data set, and other parameters (specified in the processing request PR). The result RES from executing the process of step R_CS shall be sent from the liaison L to the user U.

### List of reference numerals:

- C: contracts
- CM: contact manager
- CN: contract negotiator
- C_MD: combine metadata
- D, D1, D2: data
- DA: data analyzer
- DAG: data aggregator
- DB, DB1, DB2: data base
- DP, DP1, DP2: data provider data base
- DR: registry data base
- DS: data set
- L: liaison, processing and interface device
- MD, MD1, MD2: metadata
- PR: processing request
- PRESM: presentation manager
- PROCM: processing manager
- REG: registry data base
- RES, R_DP, R_REG: result
- RD, RD_DP: request data
- SDS, SDS_DP, SDS_REG: step "search datasets"
- U: user
- UA: user application

## Claims

1. Computer-implemented method for processing a service with sovereign data by a processing device (L), wherein following steps are executed:
a) Providing data service information (SDS), including information about conditions for a data service, by a user (U) to the processing device (L),
b) requesting at least one first search (SDS_DP) of metadata (MD1, MD2) within data sets which comply with the data service information (SDS) from at least one data provider data base (DP1, DP2) by the processing device (L), processing the at least one first search by the at least one data provider data base (DP1, DP2), and receiving at least one first result metadata (R_DP) from the first search from the at least one data provider data base (DP1, DP2) by the processing device (L),
c) requesting at least one second search (SDS_REG) of metadata (MD1, MD2) within datasets which comply with the data service information (SDS) from at least one registry data base (REG) by the processing device (L), processing the at least one second search, receiving at least one second result metadata (R_REG) from at least one registry data base (DR) by the processing device (L),
d) combining (C_MD) the at least one first and the at least one second result metadata (R_DP, R_REG) to one combined result (MD) by the processing device (L),
e) providing an actual service and actual service data by a user (U) to the processing device (L),
f) requesting service datasets (DS) using the actual service data and the combined result (MD) from the at least one data provider data base (DP1, DP2) by the processing device (L), preparing accepted conditions (AT_DP) and providing condition data to the processing device (L),
g) Processing the actual service (PR) by the processing device (L) using the actual service data and the accepted conditions (AT_DP) and returning the result (RES).

2. Method according to the preceding claim, wherein the conditions of the data service comprise technical and/or contractual information, e.g. requirements and/or characteristics.

3. Method according to one of the preceding claims, wherein the one combined result set (MD) is one single data structure.

4. Method according to one of the preceding claims, wherein in step f) preparing accepted conditions (AT_DP) is performed by approving the conditions for supporting the execution of the data service of step a), and digitally signing the conditions as accepted conditions (AT_DP).

5. Method according to one of the preceding claims, wherein in step g) the processing comprises combining schemas of the data being processed.

6. System for processing a service by a processing device (L), comprising the processing device (L), at least one data provider data base (DP1, DP2), a data registry data base (REG), wherein the steps of the method according to one of the preceding claims are executed.

7. Computer program product, comprising instructions which, when the program is executed by a computer, cause it to carry out the method/steps of the method according to one of the preceding claims.
